# EUROPÄISCHE PATENTSCHRIFT

(11) **EP 3 156 683 B1**
(45) Veröffentlichungstag und Bekanntmachung des Hinweises auf die Patenterteilung: **04.03.2020**
(21) Anmeldenummer: 16193803.0
(22) Anmeldetag: 13.10.2016
(51) Int. Cl.: F16D 65/18, B60T 1/06, F16D 55/22

(54) **BREMSE MIT EINER NOTLÜFTEINRICHTUNG**
BRAKE WITH EMERGENCY RELEASE
FREIN A DISPOSITIF MANUEL DE DESSERRAGE

(30) Priorität: 16.10.2015 DE 102015117681
(43) Veröffentlichungstag der Anmeldung: 19.04.2017
(73) Patentinhaber: Jungheinrich Aktiengesellschaft, 22047 Hamburg (DE)
(72) Erfinder: Klemp, Uwe, 19217 Holdorf (DE)
(74) Vertreter: Hauck Patentanwaltspartnerschaft mbB

(56) Entgegenhaltungen:
- CN-A- 103 754 723
- CN-Y- 2 433 241
- GB-A- 1 228 765

## Beschreibung

Die vorliegende Erfindung betrifft eine Bremse mit einer Notlüfteinrichtung, insbesondere eine elektromagnetisch öffnende Federdruckbremse. Dies erlaubt eine schnelle Notbergung, beispielsweise beim Einsatz in Flurförderzeugen.

Aus DE 10 2006 009 876 B3 ist eine elektromagnetisch öffnende Federdruckbremse mit einer Lüfteinrichtung bekannt. Die Federdruckbremse besitzt einen im Bremsgehäuse angeordneten Mikroschalter zur Verschleißkontrolle.

Aus DT 24 04 473 A1 ist eine elektromagnetisch lüftbare Federdruckbremse bekannt geworden. Zum Handlüften der Bremse ist ein den Bremskörper umgreifender, gabelförmiger Hebel vorgesehen, der schwenkbar gelagert ist. Bei einem Verschwenken des Hebels werden über eine mitschwenkende Scheibe zwei Ankerscheibenringe von einem Bremsrotor weggezogen, so dass die Bremse gelüftet ist.

Aus CN 2 433 241 ist eine stufenlos verstellbare Bremse bekannt, die über einen Handhebel gelüftet werden kann. Der Handhebel ist über eine Feder in die Betriebsposition der Bremse vorgespannt.

Für den praktischen Einsatz, insbesondere bei Flurförderzeugen, ist es wünschenswert eine schnelle und einfache Bergemöglichkeit für das Fahrzeug zu besitzen. Insbesondere bei einem Einsatz im Kundenbereich, beispielsweise in Supermärkten, ist es wünschenswert, dass ein Flurförderzeug schnell geborgen werden kann.

Der Erfindung liegt die Aufgabe zugrunde, eine Bremse mit einer Notlüfteinrichtung bereitzustellen, die mit einfachen Mitteln gelüftet werden kann.

Erfindungsgemäß wird die Aufgabe durch eine Bremse mit den Merkmalen aus Anspruch 1 gelöst. Vorteilhafte Ausgestaltungen bilden den Gegenstand der Unteransprüche.

Die erfindungsgemäße Bremse ist mit einer Notlüfteinrichtung ausgestattet. Die Notlüfteinrichtung weist einen drehbar an einem Gehäuse der Notlüfteinrichtung gelagerten Verstellring auf, der eine Notlüftposition und eine Betriebsposition besitzt. In dem Gehäuse ist mindestens ein Zugelement verschieblich gelagert. Das verschiebliche Zugelement besitzt einen in radialer Richtung aus dem Gehäuse, insbesondere einem Langloch im Gehäuse, vorstehenden Mitnehmer. Der Mitnehmer liegt an einem Verstellabschnitt an. Der Verstellabschnitt bewegt bei einem Stellvorgang des Verstellrings in seine Notlüftposition das mindestens eine Zugelement über den Mitnehmer in eine die Bremse lüftende Position. Im Bereich der Notlüftposition sind den Mitnehmer haltende Mittel vorgesehen. Durch eine Betätigung des Verstellrings wirkt der Verstellabschnitt auf den Mitnehmer, der das Zugelement in seiner Längsrichtung verschiebt. In einer Notlüftposition des Verstellrings befindet das Zugelement sich in einer die Bremse lüftenden Position. Durch die im Bereich der Notlüftposition vorgesehenen Mittel wird der Verstellring in seiner Notlüftposition gehalten und die Bremse ist dauerhaft gelüftet. Ein besonderer Vorteil der erfindungsgemäßen Bremse ist, dass, nachdem der Verstellring in die Notlüftposition gestellt wurde, er dort ohne weitere Maßnahmen verbleibt und bei gelüfteter Bremse eine Notbergung ausgeführt werden kann.

Bevorzugt ist als den Mitnehmer haltendes Mittel eine Sicherung für den Verstellring vorgesehen. Alternativ oder zusätzlich kann auch der Verstellabschnitt im Bereich der Notlüftposition eine den Mitnehmer haltende Vertiefung (I) besitzen. In Ergänzung hierzu oder auch als ausschließliches Mittel zum Halten der Position kann vorgesehen sein, dass im Bereich der Notlüftposition der Mitnehmer reibschlüssig an dem Verstellabschnitt gehalten wird.

In einer weiter bevorzugten Ausgestaltung ist das Zugelement über eine Feder in seine Betriebsposition vorgespannt. Bei der Feder handelt es sich nicht um eine die Bremswirkung auslösende Feder. Die Feder stellt die Anlage des Mitnehmers an den Verstellabschnitt sicher. Alternativ ist es auch möglich, einen den Mitnehmer umgreifenden bzw. haltenden Verstellabschnitt vorzusehen.

In einer bevorzugten weiteren Ausgestaltung wird der Verstellabschnitt bei dem Stellvorgang in Umfangsrichtung entlang dem Mitnehmer bewegt. Durch diese Bewegung gibt die Kontur des Verstellabschnitts vor, wie der Mitnehmer den Telleranker in seiner Längsrichtung verschiebt.

In einer bevorzugten Ausgestaltung ist der Verstellabschnitt zwischen der Notlüft- und der Betriebsposition mit einem höchsten Punkt ausgestattet, in dem der Telleranker über seine die Bremse lüftende Position in axialer Richtung hinaus geschoben ist. Anschließend an den höchsten Punkt besitzt der Verstellabschnitt seine den Mitnehmer haltende Vertiefung. Durch den höchsten Punkt in dem Verstellabschnitt wird der Mitnehmer besonders zuverlässig in der Notlüftposition gesichert.

In einer weiter bevorzugten Ausgestaltung ist der Verstellring in einem definierten Winkelbereich zwischen Notlüftposition und Betriebsposition verstellbar. Der definierte Winkelbereich kann beispielsweise kleiner als 180°, vorzugsweise kleiner als 90° und insbesondere kleiner als 45° sein. Zur leichteren Betätigung besitzt der Verstellring einen in radialer Richtung abstehenden Griff. Der Griff besitzt einen länglichen Schaft und bevorzugt einen abklappbaren und/oder teleskopierbaren Endabschnitt, mit dem der Griff insgesamt verkürzt werden kann.

In einer bevorzugten Ausgestaltung besitzt der Mitnehmer reibungsreduzierende Elemente, mit denen er an dem Verstellabschnitt anliegt. Über die reibungsreduzierenden Elemente wird die Reibung zwischen Mitnehmer und Verstellabschnitt reduziert. Die Reibung ist dabei so gewählt, dass der Verstellring nicht zu schwergängig läuft.

In einer bevorzugten Ausgestaltung ist die Bremse als eine Federkraftbremse ausgebildet, die beispielsweise elektromagnetisch betätigbar ist. Eine bevorzugte Anwendung der Bremse erfolgt in Flurförderzeugen, insbesondere in Flurförderzeugen mit einem mindestens dreirädrigen Fahrwerk, bei dem das angetriebene Rad lenkbar ist und beispielsweise über eine Deichsel gestellt werden kann.

Eine bevorzugte Ausgestaltung der erfindungsgemäßen Bremse wird nachfolgend an einem Ausführungsbeispiel näher erläutert. Es zeigen:
- Fig. 1: eine perspektivische Ansicht eines deichselgeführten Niederhubfahrzeugs, dessen Antriebsrad mit der erfindungsgemäßen Bremse ausgestattet ist,
- Fig. 1A: die Notlüfteinrichtung am Fuß der Deichsel im Detail,
- Fig. 2: die Antriebseinheit für das gelenkte Rad mit Motorbremse und Notlüfteinrichtung,
- Fign. 3, 3b, 3c: die Notlüfteinrichtung im Detail in der Notlüftposition,
- Fign. 4, 4d, 4e: die Bremse im eingefallenen Zustand,
- Fig. 5: in einer Detailansicht den Verstellring auf dem Gehäuse der Bremse und
- Fign. 6a - 6f: den Vorgang der Notlüftung.

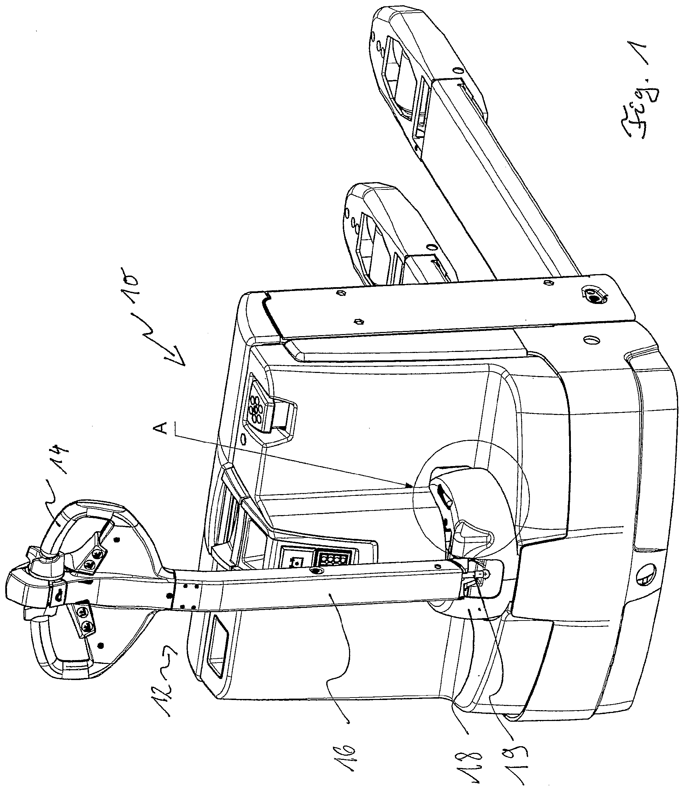

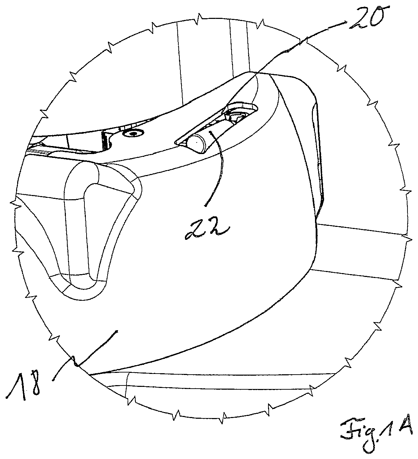

Fig. 1 zeigt ein deichselgeführtes Niederhubflurförderzeug 10 mit einer Deichsel 12. Die Deichsel 12 besitzt einen Deichselkopf 14, einen Deichselarm 16 und einen Deichselfuß 19. Der Deichselfuß 19 ist unter der Antriebshaube 18 mit einer Antriebslagerung verbunden. Der Deichselkopf 14 trägt Betätigungselemente für den Betrieb des Fahrzeugs 10. Der Deichselarm 16 ist relativ zu dem Deichselfuß 19 um eine horizontal verlaufende Achse schwenkbar. Fig. 1 zeigt den Deichselarm 16 in seiner vertikalen Position. Der Deichselfuß 19 ist um eine vertikale Achse drehbar an dem Fahrzeug gelagert.

Detailfigur 1A zeigt die Antriebshaube 18. In der Antriebshaube angeordnet ist ein Langschlitz 20, über den ein Hebel 22 ohne Werkzeuge zugänglich ist.

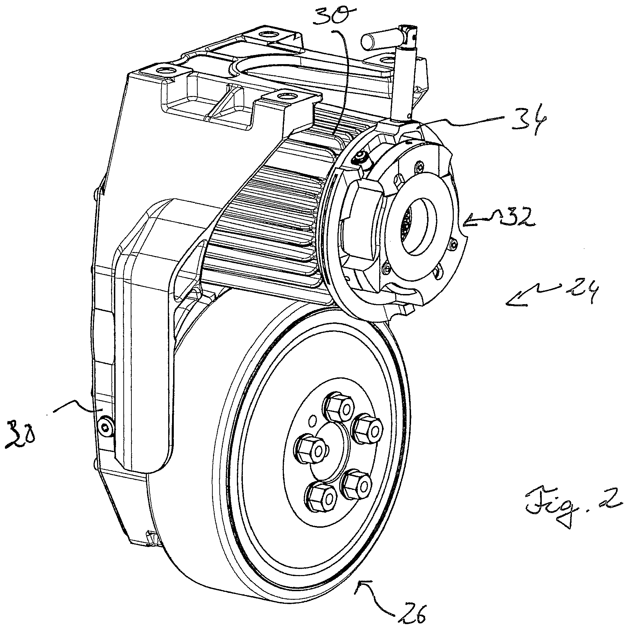

Fig. 2 zeigt eine Antriebseinheit 24, wie sie bei dem in Fig. 1 dargestellten Fahrzeug vorgesehen ist. Die Antriebseinheit 24 besitzt ein bereiftes Rad 26, das über ein seitlich angeordnetes Getriebe 28 angetrieben wird. Ein Elektromotor 30 sitzt oberhalb des Rades 26 und besitzt endseitig eine Bremse 32 mit einer Notlüfteinrichtung 34. In der Regel ist die Antriebseinheit 24 um eine vertikale Achse drehbar an dem Fahrzeug angeordnet, wobei das angetriebene Rad 26 über die Schwenkbewegung der Deichsel ausrichtbar ist.

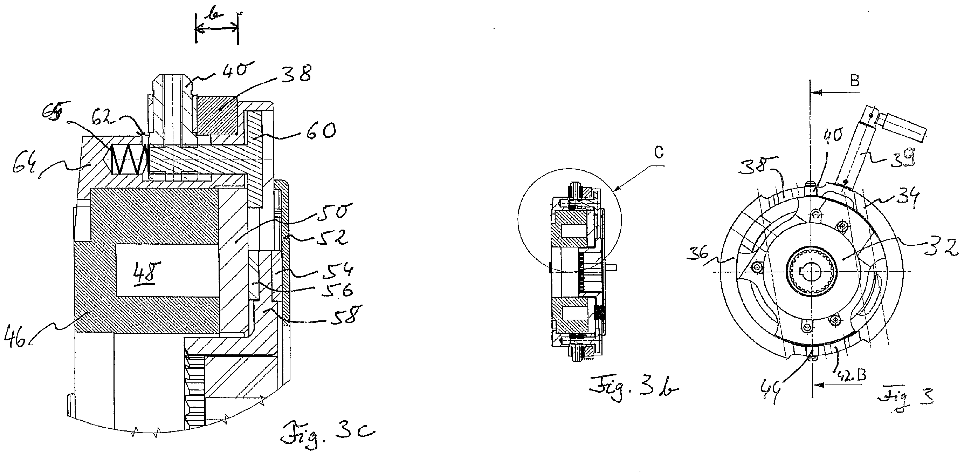

Fig. 3 zeigt eine Draufsicht auf die Bremse 32 sowie die Notlüfteinrichtung 34. In Fig. 3 zu erkennen ist ein umlaufender Verstellring 36, der einen Griff 39 besitzt. Der Verstellring 36 besitzt einen Verstellabschnitt 38, in dem ein Mitnehmer 40 anliegt. Um 180° versetzt, besitzt der Verstellring 36 einen zweiten Verstellabschnitt 42, in dem ein zweiter Mitnehmer 44 anliegt.

Bei einem Verstellvorgang wird der Verstellring 36 mit Hilfe des Griffs 39 gedreht, wodurch die Mitnehmer 40, 44 jeweils entlang der Verstellabschnitte 38, 42 verstellt werden und in axialer Richtung die Position der Zugelemente verändert.

Fig. 3b zeigt einen Querschnitt entlang der Linie B-B aus Fig. 3. Fig. 3c ist eine vergrößerte Detailansicht zu dem in Fig. 3b gekennzeichneten Bereich C. Fig. 3c zeigt das Gehäuse der Bremse 46 mit einer Ringausnehmung 48. In der Ringausnehmung 48 sind, wie bei elektromagnetischen Federkraftbremsen üblich, der oder die Elektromagneten und eine oder mehrere Federn angeordnet. Elektromagnet und Feder wirken auf die Ankerplatte 50 der Bremse. Die Ankerplatte 50 wirkt über einen Bremsbelag 56 auf den Bremsrotor 58. Ein zweiter Bremsbelag 54 liegt an einem Reibblech 52 der Bremse an. Deutlich zu erkennen in Fig. 3c ist ein Zugelement 60, das mit dem Mitnehmer 40 verbunden ist. Der Mitnehmer 40 steht über ein Langloch 62 aus einem Gehäuse 64 der Notlüfteinrichtung heraus. Am Schaft des Zugelements 60 ist eine Feder 66 angeordnet, die das Zugelement 60 aus dem Gehäuse drückt. Über den Mitnehmer 40 und den Verstellabschnitt 38 des Verstellrings wird das Zugelement 60 in seine Position gestellt. Wie in Fig. 3c zu erkennen, ist die Breite b des Verstellabschnitts 38 so gewählt, dass das Zugelement an der Ankerplatte 50 anliegt und diese vom Rotor 58 und dem Bremsbelag 56 hin zu dem Bremsgehäuse 64 zieht, um einen Luftspalt zwischen Ankerplatte 50 und Bremsbelag 56 zu bilden. Durch den Verstellabschnitt 38 wird die Ankerplatte 50 also gelüftet, genauso als würde diese während des Betriebs beispielsweise magnetisch gelüftet. Als Zugelement kann jedes Element eingesetzt werden, das durch eine Bewegung in Längsrichtung mit einer Klaue oder dergleichen die Ankerplatte 50 drücken kann.

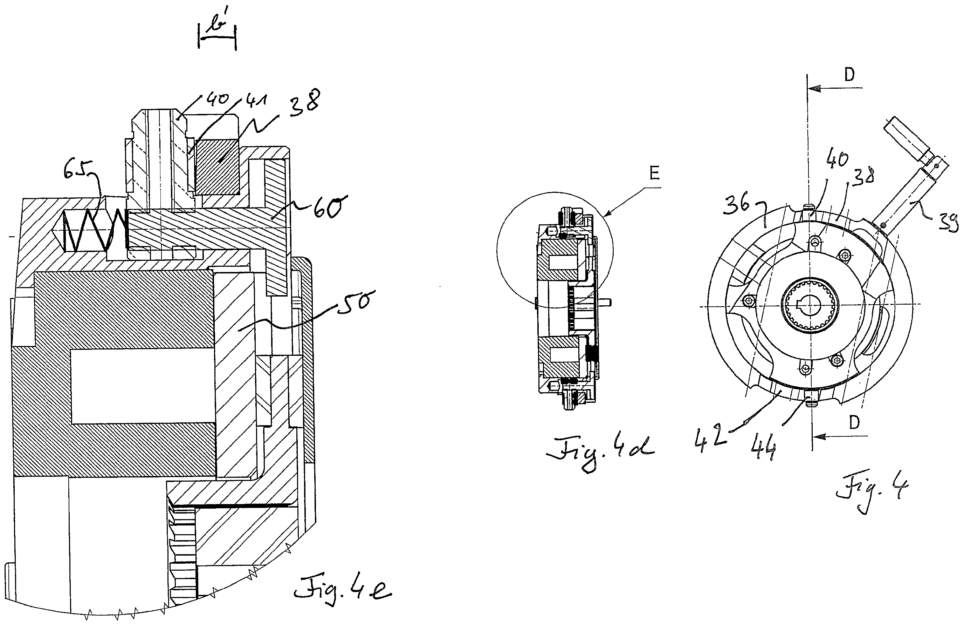

Fig. 4 zeigt den Verstellring 36. Dieser ist dabei im Uhrzeigersinn gegenüber der Stellung in Fig. 3 gedreht, so dass der Mitnehmer 40 am anderen Ende des Verstellabschnitts 38 verglichen mit der Stellung in Fig. 3 anliegt. Ebenso ist der Mitnehmer 44 relativ zu dem Verstellabschnitt 42 gedreht.

Fig. 4e zeigt, dass der Verstellabschnitt 38 hier eine Breite b' besitzt, die kleiner als die Breite b in Fig. 3c ist. Die Feder 65 drückt das Zugelement 60 vor, so dass die Ankerplatte 50 wie üblich an der Bremse eingesetzt werden kann. Zwischen Zugelement 60 und Ankerplatte 50 entsteht ein Spiel, das eine normale Betätigung der Ankerplatte im Rahmen einer elektromagnetischen Federkraftbremse gestattet. Der Mitnehmer 40 liegt mit seinem reibungsreduzierenden Element 41 an dem Verstellabschnitt 38 an.

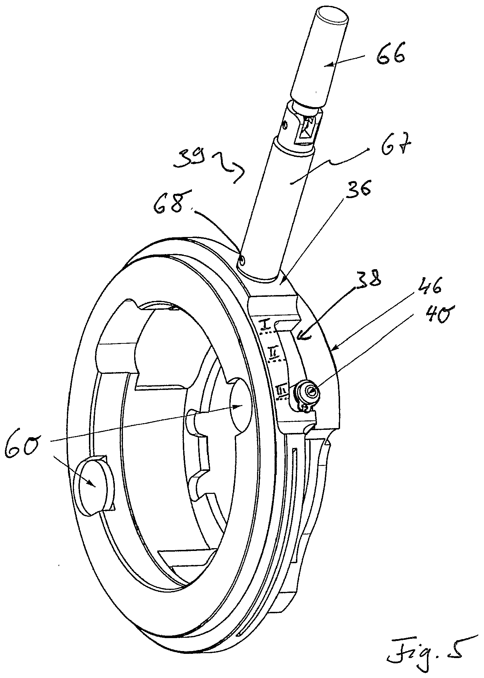

Fig. 5 zeigt den Verstellring 36. Der Verstellring 36 besitzt einen Verstellabschnitt 38. Wie in Fig. 5 zu erkennen, besitzt der Verstellabschnitt 38 drei unterschiedliche Breiten I, II und III. In der Stellung III ist die Breite des Verstellabschnitts 38 in axialer Richtung am geringsten. Sie entspricht der Breite b' in Fig. 4e. Im Abschnitt I ist die Breite des Verstellabschnitts 38 in axialer Richtung am größten und entspricht der Breite b. Der Bereich II muss bei einem Verstellen des Verstellrings 36 überwunden werden. Im Abschnitt I liegt die in Fig. 3c gezeigte Notlüftposition vor. Der Verstellabschnitt 38 besitzt hier die Breite b, durch die das Zugelement 60 die Ankerplatte 50 lüftet. In Fig. 5 ist zu erkennen, dass insgesamt zwei Telleranker 60 vorgesehen sind. Je nach Auslegung der Bremse kann auch mit einem oder mehr als zwei Zugelemente 60 der Notlüftvorgang durchgeführt werden.

Fig. 5 ist ebenfalls der Aufbau des Griffs 39 zu entnehmen. Der Griff 39 besitzt einen Endabschnitt 66, der schwenkbar an dem Griff 39 angeordnet ist. Ein mit dem Verstellring 36 verbundener, unterer Griffabschnitt 67 ist über eine Klappeinrichtung 68 an dem Verstellring 36 verschwenkbar gelagert.

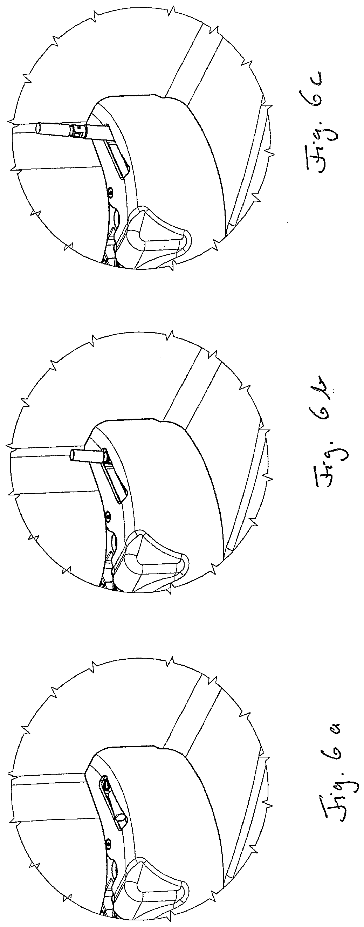

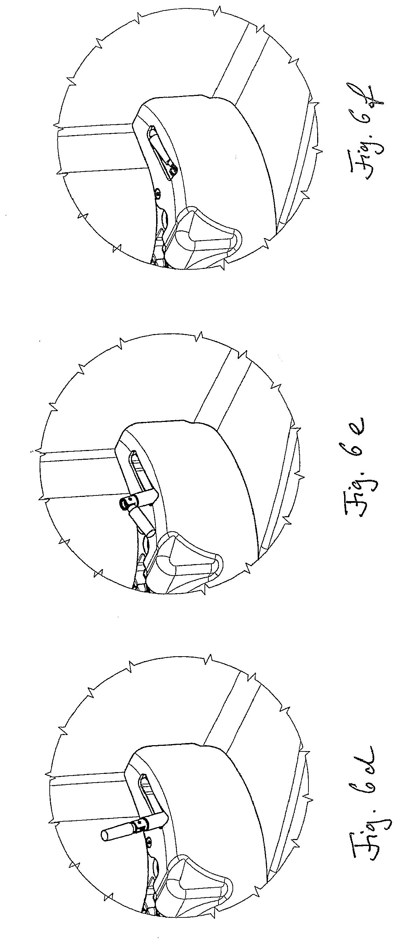

Fign. 6a bis 6f zeigen die Schaltstellungen der Notlüfteinrichtung an dem in Fig. 1 dargestellten Fahrzeug im Detail. Fig. 6a zeigt den Normalbetrieb der Bremse, in dem die Bremse betriebsbereit ist und als Federkraftbremse eingesetzt werden kann. In Fig. 6b ist der Griff 39 ausgeklappt und der Griffabschnitt 67 steht vor. In Fig. 6c ist der Griff 39 ausgezogen. Über den Griff 39 kann die Notlüfteinrichtung betätigt werden. In dieser Stellung ist bei ausgezogenem Griff der Lenkbereich des Fahrzeugs eingeschränkt. Nachfolgend kann der Griffabschnitt 66 eingeklappt und der Griff gedreht und eingeschoben werden, so dass bei eingenommener Notlüftstellung das Fahrzeug wieder vollen Lenkbereich besitzt. Grundsätzlich kann auch ohne Klappen des Griffabschnitts oder ein teleskopierbares Herausziehen die Notlüfteinrichtung betätigt werden.

### Bezugszeichenliste

- 10: Niederhubflurförderzeug
- 12: Deichsel
- 14: Deichselkopf
- 16: Deichselarm
- 18: Antriebshaube
- 19: Deichselfuß
- 20: Langschlitz
- 22: Hebel
- 24: Antriebseinheit
- 26: Rad
- 28: Getriebe
- 30: Elektromotor
- 32: Bremse
- 34: Notlüfteinrichtung
- 36: Verstellring
- 38: Verstellabschnitt
- 39: Griff
- 40: Mitnehmer
- 41: reibungsreduzierendes Element
- 42: Verstellabschnitt
- 44: Mitnehmer
- 46: Gehäuse
- 48: Ringausnehmung
- 50: Ankerplatte
- 52: Reibblech
- 54: Bremsbelag
- 56: Bremsbelag
- 58: Bremsrotor
- 60: Zugelement
- 62: Langloch
- 64: Gehäuse
- 65: Feder
- 66: Endabschnitt
- 67: Griffabschnitt

## Patentansprüche

1. Bremse mit einer Notlüfteinrichtung (34), die einen drehbar an einem Gehäuse (64) gelagerten Verstellring (36) aufweist, der eine Notlüftposition und eine Betriebsposition besitzt, wobei in dem Gehäuse (64) mindestens ein Zugelement (60) verschieblich gelagert ist, das einen in radialer Richtung aus dem Gehäuse (64) vorstehenden Mitnehmer (40) besitzt, der an einem Verstellabschnitt (38) anliegt und der bei einem Verstellvorgang des Verstellrings (36) in seine Notlüftposition das Zugelement (60) in eine die Bremse lüftende Position bewegt, wobei im Bereich der Notlüftposition den Mitnehmer haltende Mittel vorgesehen sind.

2. Bremse nach Anspruch 1, **dadurch gekennzeichnet, dass** die den Mitnehmer haltenden Mittel eine Sicherung für den Verstellring aufweisen.

3. Bremse nach Anspruch 1 oder 2, **dadurch gekennzeichnet, dass** der Verstellabschnitt im Bereich der Notlüftposition eine den Mitnehmer haltende Vertiefung (I) besitzt.

4. Bremse nach einem der Ansprüche 1 bis 3, **dadurch gekennzeichnet, dass** der Verstellabschnitt im Bereich der Notlüftposition den Mitnehmer reibschlüssig hält.

5. Bremse nach einem der Ansprüche 1 bis 4, **dadurch gekennzeichnet, dass** das Zugelement über eine Feder in seine Betriebsposition vorgespannt ist.

6. Bremse nach einem der Ansprüche 1 bis 5, **dadurch gekennzeichnet, dass** der Verstellabschnitt (38) bei dem Verstellvorgang sich in Umfangsrichtung entlang dem Mitnehmer (40) bewegt.

7. Bremse nach einem der Ansprüche 1 bis 6, **dadurch gekennzeichnet, dass** der Verstellabschnitt zwischen der Notlüft- und der Betriebsposition einen höchsten Punkt (II) besitzt, in dem das Zugelement (60) über seine die Bremse lüftende Position in axialer Richtung hinaus geschoben ist.

8. Bremse nach einem der Ansprüche 1 bis 7, **dadurch gekennzeichnet, dass** der Verstellabschnitt in axialer Richtung aus seiner Betriebsposition kommend ansteigt und zur Notlüftposition hin abfällt.

9. Bremse nach einem der Ansprüche 1 bis 8, **dadurch gekennzeichnet, dass** der Verstellring in einem definierten Winkelbereich zwischen Notlüftposition und Betriebsposition verstellbar ist.

10. Bremse nach einem der Ansprüche 1 bis 9, **dadurch gekennzeichnet, dass** der Verstellring einen in radialer Richtung abstehenden Griff besitzt.

11. Bremse nach Anspruch 10, **dadurch gekennzeichnet, dass** der Griff (39) einen länglichen Schaft und einen abklappbaren und/oder teleskopierbaren Endabschnitt besitzt.

12. Bremse nach einem der Ansprüche 1 bis 11, **dadurch gekennzeichnet, dass** der Mitnehmer ein oder mehrere reibungsreduzierende Elemente (41) aufweist, mit denen er an dem Verstellabschnitt (38) anliegt.

13. Bremse nach einem der Ansprüche 1 bis 12, **dadurch gekennzeichnet, dass** die Bremse als eine Federkraftbremse ausgebildet ist.

14. Bremse nach Anspruch 13, **dadurch gekennzeichnet, dass** die Federkraftbremse elektromagnetisch betätigt wird.

## Claims

1. Brake with an emergency release device (34) which has an adjusting ring (36) which is rotatably mounted on a housing (64) and has an emergency release position and an operating position, at least one tension element (60) being displaceably mounted in the housing (64) and having a catch (40) projecting in the radial direction from the housing (64), which bears against an adjusting section (38) and which, during an adjustment operation of the adjusting ring (36) into its emergency release position, moves the tension element (60) into a position releasing the brake, means holding the catch being provided in the region of the emergency release position.

2. Brake according to claim 1, **characterized in that** the means holding the catch feature a safety device for the adjusting ring.

3. Brake according to claim 1 or 2, **characterized in that** the adjusting section has a recess (I) in the region of the emergency release position which holds the catch.

4. Brake according to one of claims 1 to 3, **characterized in that** the catch is held frictionally by the adjusting section in the area of the emergency release position.

5. Brake according to any one of claims 1 to 4, **characterized in that** the tension element is preloaded into its operating position by a spring.

6. Brake according to any one of claims 1 to 5, **characterized in that** the adjusting portion (38) moves in a circumferential direction along the catch (40) during the adjusting operation.

7. Brake according to one of claims 1 to 6, **characterized in that** the adjustment section between the emergency release position and the operating position has a highest point (II) at which the tension element (60) is pushed in the axial direction beyond its position releasing the brake.

8. Brake according to one of claims 1 to 7, **characterized in that** the adjustment section rises in axial direction from its operating position and descends towards the emergency release position.

9. Brake according to one of claims 1 to 8, **characterized in that** the adjusting ring is adjustable in a defined angular range between emergency release position and operating position.

10. Brake according to any one of claims 1 to 9, **characterized in that** the adjusting ring has a handle projecting in the radial direction.

11. Brake according to claim 10, **characterized in that** the handle (39) has an elongated shaft and a foldable and/or telescopic end portion.

12. Brake according to any one of claims 1 to 11, **characterized in that** the catch has one or more friction-reducing elements (41) with which it bears against the adjusting portion (38).

13. Brake according to one of claims 1 to 12, **characterized in that** the brake is designed as a spring-applied brake.

14. Brake according to claim 13, **characterized in that** the spring-applied brake is electromagnetically operated.

## Revendications

1. Frein avec un système de ventilation de secours (34) présentant une bague de réglage (36) montée de façon rotative sur un boîtier (64), laquelle possède une position de ventilation de secours et une position de fonctionnement, dans lequel au moins un élément de traction (60) est monté de façon coulissante dans le boîtier (64), lequel possède un entraîneur (40) faisant saillie dans une direction radiale hors du boîtier (64), lequel s'applique sur une section de réglage (38) et déplace l'élément de traction (60) vers une position de ventilation de frein lors d'un processus de réglage de la bague de réglage (36) dans sa position de ventilation de secours, des moyens destinés à maintenir l'entraîneur sont prévus dans la région de la position de ventilation de secours.

2. Frein selon la revendication 1, **caractérisé en ce que** les moyens destinés à maintenir l'entraîneur présentent une sécurité pour la bague de réglage.

3. Frein selon la revendication 1 ou 2, **caractérisé en ce que** dans la région de la position de ventilation de secours, la section de réglage possède un renfoncement (I) maintenant l'entraîneur.

4. Frein selon l'une des revendications 1 à 3, **caractérisé en ce que** la section de réglage maintient l'entraîneur par frottement dans la région de la position de ventilation de secours.

5. Frein selon l'une des revendications 1 à 4, **caractérisé en ce que** l'élément de traction est précontraint dans sa position de fonctionnement à l'aide d'un ressort.

6. Frein selon l'une des revendications 1 à 5, **caractérisé en ce que** la section de réglage (38) se déplace dans une direction périphérique le long de l'entraîneur (40) lors du processus de réglage.

7. Frein selon l'une des revendications 1 à 6, **caractérisé en ce que** la section de réglage possède un point maximal (II) entre la position de ventilation de secours et la position de fonctionnement, auquel l'élément de traction (60) est poussé dans la direction axiale au-delà de sa position de ventilation de frein.

8. Frein selon l'une des revendications 1 à 7, **caractérisé en ce que** la section de réglage s'élève dans la direction axiale en sortant de sa position de fonctionnement et s'abaisse vers la position de ventilation de secours.

9. Frein selon l'une des revendications 1 à 8, **caractérisé en ce que** la bague de réglage est réglable entre la position de ventilation de secours et la position de fonctionnement dans une plage angulaire définie.

10. Frein selon l'une des revendications 1 à 9, **caractérisé en ce que** la bague de réglage possède une poignée faisant saillie dans la direction radiale.

11. Frein selon la revendication 10, **caractérisé en ce que** la poignée (39) possède une tige allongée et une section d'extrémité rabattable et/ou télescopique.

12. Frein selon l'une des revendications 1 à 11, **caractérisé en ce que** l'entraîneur présente un ou plusieurs éléments de réduction du frottement (41) avec lesquels il s'applique sur la section de réglage (38).

13. Frein selon l'une des revendications 1 à 12, **caractérisé en ce que** le frein est conçu comme un frein à ressort.

14. Frein selon la revendication 13, **caractérisé en ce que** le frein à ressort est actionné de façon électromagnétique.
